## Europäisches Patentamt

## European Patent Office

## Office européen des brevets

(11) Publication number : **0 067 801**
**B1**

(12) **EUROPEAN PATENT SPECIFICATION**

(45) Date of publication of patent specification :
15.08.84

(51) Int. Cl.³ : **F 24 F 11/00, G 05 D 23/20**

(21) Application number : **82850049.6**

(22) Date of filing : **11.03.82**

(54) **Arrangement in climatization systems.**

(30) Priority : **12.06.81 SE 8103698**

(43) Date of publication of application :
**22.12.82 Bulletin 82/51**

(45) Publication of the grant of the patent :
**15.08.84 Bulletin 84/33**

(84) Designated contracting states :
**BE CH DE FR GB IT LI NL SE**

(56) References cited :
**EP-A- 0 004 525**
**DE-A- 2 951 219**
**Patent Abstracts of Japan, Vol. 5, No. 43, 23 March 1981**

(73) Proprietor : **TOUR & ANDERSSON AKTIEBOLAG**
**Svärdlangsvägen 46 Johanneshov**
**S-121 72 Stockholm (SE)**

(72) Inventor : **Claesson, Kjell**
**Täljstensvägen 7**
**Huddinge (SE)**
Inventor : **Rönnerholm, Stig**
**Kardborrvägen 14**
**Handen (SE)**
Inventor : **Strand, Rolf**
**Västergärdsvägen 46**
**Huddinge (SE)**

(74) Representative : **Avellan-Hultman, Bengt**
**Hultmans Patentbyra Aktiebolag Jungfrugatan 16**
**P.O. Box 5165**
**Stockholm 5 (SE)**

Jouve, 18, rue St-Denis, 75001 Paris, France

EP 0 067 801 B1

## Description

In systems for climatization within buildings and the like it has been proposed that one should not only take in account the temperature of the air inside of the building but also the temperature of the air outside of the building.

In this connection, by the conception « climatization » is understood heating, cooling and ventilation or one or two or more of these circumstances in combination. Independently of if the climatization regards heating or cooling, it should, thus, be dependent upon the temperature in the interior of the building but also, to some extent, upon the temperature of the atmosphere outside of the building. Thereby, however, it should be observed that these two temperatures act in mutually different ways.

If, for instance, the inside temperature is so low that it cannot be regarded comfortable it should be increased by the amount of difference between the temperature proper and the desired, comfortable temperature. This increase of temperature, however, is counteracted by the usually lower temperature of the atmosphere outside of the building, whereas it is supported by an accidently existing higher temperature of same atmosphere. Assuming that the run of the heating of the localities forms a linear function with time, then the retardation or acceleration, respectively, of the process, caused by the outside temperature, would act closely like the first derivative with time of the first mentioned function. This has caused complications.

Further, one has for the purpose of saving power proposed, during nights, week ends and the like completely or in part to shut off the climatization of such localities in which no people are living or are active during the said periods of time in order, thereafter, to start the climatization process at such a time before the localities are again taken into use that the comfortable conditions will exist when the localities are taken into use again. The time required for establishing the said comfortable conditions, the « starting time », must, as evident from the above, not only be dependent upon the inside temperature but also upon the outside temperature. The first one is composed by the temperature of the air in the localities of the building, which has a rather small heat capacity, and by the temperature of solid objects such as internal walls, furniture and the like, having an essentially greater heat capacity and, therefore, being heated at a slower rate. This has also caused complications.

From the EP-A-0 004 525 an arrangement is known for starting and stopping, respectively, a climatization system, e. g. a heating system for a locality, dependent upon, at least, the interior temperature proper of the locality and the outdoor temperature. Said arrangement comprises a pulse generator for forming a pulse train, said train of pulses being fed to a comparator which is also fed with a voltage from a means indicating the outdoor temperature so that when a state of balance is obtained between the two voltages, a signal is transmitted for starting the climatization system.

The above mentioned complications have caused that climatization systems hitherto proposed, and also the above mentioned climatization system according th the EP-A0 004 525 have been rather complicated and, thereby, also expensive as well as sensitive to disturbances of many different types. Thus, there is a need for a system, which will, perhaps, not function with the maximum accuracy but, nevertheless with an acceptable accuracy for use in smaller buildings or in buildings such as storage localities or the like, where no excessive demands on accuracy are raised but, instead, the system is of a simple construction and is cheap in supply and support and is reliable in operation.

The aim of the invention, especially, is that the starting period of time, i. e. the period of time between the starting of the climatization system and achieving the comfortable temperature or other conditions, shall take place by successively changing the pulse-time relation in the train of pulses which is started before or at the beginning of the starting time, further that the train of pulses shall be equalized so that a smaller voltage or current, below as a matter of simplification referred to as « voltage » shall be obtained, the smaller the pulse-time relation is and that, finally, this voltage shall be compared in a comparator with a « voltage » forming an expression for the outside temperature.

The invention, thus, regards an arrangement for starting and stopping, respectively, a climatization system, e. g. a heating system for a locality, dependent upon, at least, the interior temperature proper and the outdoor temperature, comprising a pulse generator for creating pulses forming a pulse train, said train of pulses being fed to a comparator which is also fed with a voltage from a means indicating the outdoor temperature so that when a state of balance is obtained between the two voltages, a signal is transmitted for starting the climatization system.

According to the invention, the pulse generator is arranged to create pulses of successively changed pulse-time relation, said train of pulses being fed to an equalization device and from this in the form of a successively changed voltage, preferably a D. C. voltage, which is at least approximately free from A. C. components, to the comparator, so that when the state of balance between the two voltages is obtained, a signal will be transmitted for starting the climatization system, a conduit being provided to transmit an indication, e. g. from a timer, to the climatization system to stop the operation at a preselected time.

The invention will be described below in connection with an embodyment shown in the attached drawings.

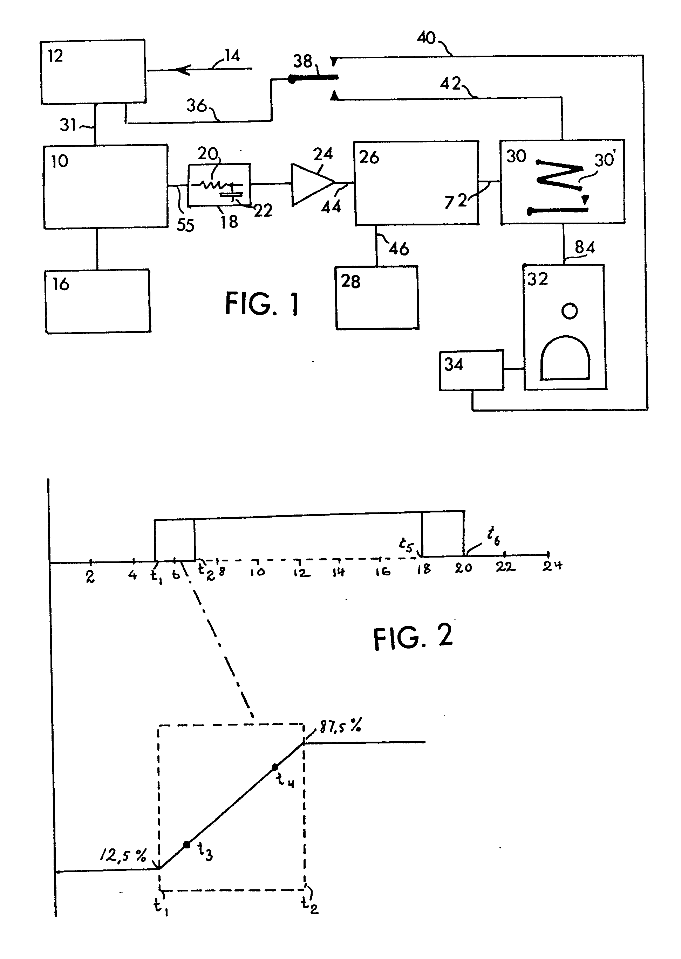

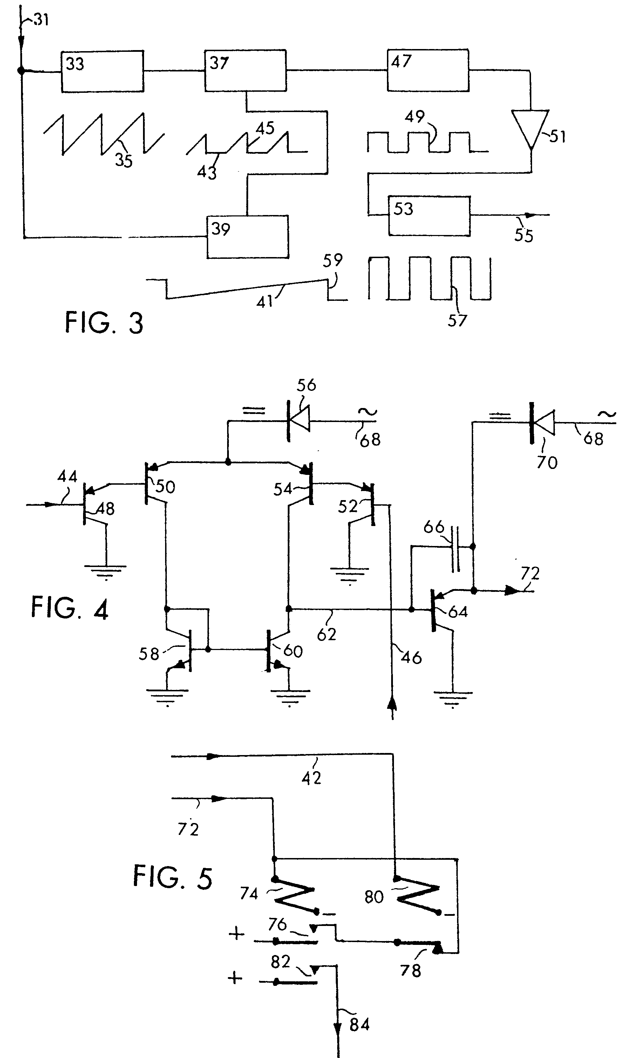

In the drawings, Fig. 1 shows a block diagram in general terms of the complete arrangement, whereas Fig. 2 shows a time diagram for explaining the run of the procedure. Fig. 3 shows a more detailed block diagram along with illustrations of different pulse shapes of the pulse generator part of the arrangement shown in Fig. 1. Fig. 4 shows a diagram of the comparator part of same arrangement, and, finally, Fig. 5 shows a diagram of the starting and stopping device for the means causing the effective climatization, here shown as a heating vessel which is assumed to feed a heat radiator system of conventional type.

In Fig. 1, the pulse generator 10 is of a type which will be further described below in connection with Fig. 3. The pulse generator is started from a timer 12, which is preferably adjustable. The possibility of adjustment, in Fig. 1, has been schematically indicated by means of a conduit 14. An arrangement 16 of some king known *per se* may be provided for measuring the inside temperature or other circumstances which should be fed to the pulse generator for determining its function.

This arrangement, however, should only be regarded schematically. As a matter of fact, it is not of decisive importance to the present invention how an expression for the indication concerned is introduced into the arrangement which is dependent upon the inside temperature and this device may, for instance, be made in accordance with the DE-A 2.617.154, but one may also introduce this indication into an arrangement in some other way such as over the conduit into the arrangement in some other way such as over the conduit 14. In extremely simple cases, one may, based upon reading the internal temperature and upon experience state the correct moment of time for starting the arrangement and, in this way, introduce an indication dependent upon the interior temperature into the timer 12 for establishing its function.

The output circuit from the pulse generator 10 is connected to some equalization device, in the present case as described here comprising an L-filter composed by a resistor 20 and a condenser 22, but, of course, also other filter constructions may be used. The output conduit continues from the filter 20 to an amplifier 24 and from this to a comparator 26 having two inputs. One of said inputs is formed by the connection from the amplifier 24, the other input conduit coming from a sensor means 28, for instance a thermistor with the amplifier pertaining thereto of a type known *per se* said means giving off a voltage to the comparator 26 for indication of the outdoor temperature. This voltage, for practical reasons, should be in an order of magnitude which is comparable with the magnitude of the voltage on the conduit from the amplifier 24.

The output circuit from the comparator 26 runs to the starter device 30 for the climatization process, said starter device usually comprising a starter relay 30'.

As a matter of simplification, it has been assumed in the embodyment now described that the climatization is intended for heating some locality by means of some climatization device, in the described embodyment comprising a heater vessel 32, which feeds, in the traditional way, a heater transfer medium such as hot water to a system of heat radiators. The function of this is controlled from some device such as a themostatically governed control arrangement which starts or stops the heating vessel, respectively, or changes the setting of a shunt valve, introduced into the feeder conduit for hot water to the heat radiators in order to change the temperature of the heat carrier medium or in some other way which does not, *per se*, form part of the present invention, takes care of the maintenance of the comfortable temperature. The control device is shown schematically at 34. Such control devices, e. g. thermostates, and their general function are known *per se.*

Thus, it is not of decisive importance to the present invention how the adjustment of the timer 12 takes place over the conduit 14. In an especially simple embodyment of the invention, this adjustment may tale place by hand by some person, well aquainted with the function of the system and dependent upon the building technical circumstances, the indoor temperature and/or other circumstances so that the starting will take place at least approximately at the correct time $t_1$, see Fig. 2. This time $t_1$ should be well before the time $t_2$ at which the comfortable temperature should exist in the climatization controlled locality. In a more advanced embodyment of the invention, one may feed to the conduit 14 an electrocally carried expression for different circumstances which may influence the suitable time for starting the climatization process, such as in addition to the indoor temperature also the existence of sun shine or rain or clouds, the wind pressure onto the outside walls of the building and so on. To indicate the introduction of such indications, the arrangement 16 has been shown schematically in Fig. 1.

As evident from Fig. 2, the intention is that, in the shown embodyment, the comfortable temperature or other climatic conditions should exist within the locality from 7 : 00 to 18 : 00 o'clock, the starting period of time for instance running from 5 : 00 to 7 : 00 o'clock or beginning at some other time, indicated by the timer 12, whereas the shut off time should start at 18 : 00 o'clock and get to an end at some other time, which may, as indicated in Fig. 2, for instance be 20 : 00. This latter time, of course, is dependent upon the outdoor climatic circumstances, because the change of climatic conditions inside of the building will, during the period of time following after 18 : 00 o'clock be dependent upon the natural change when the climatization system is out of work.

The pulse generator 10 transmits pulses of some suitable frequency. This frequency may perhaps be variable but preferably the frequency should be constant and rather high. However, it is characteristic to the present invention that the pulse-time relation is successively variable, as seen from the enlarged picture of the block from the time $t_1$ to the time $t_2$ shown below said block. The pulse-time relation by which is meant the part of each separate pulse period comprising an active pulse, in relation to the total of the pulse duration, thus, is variable. At the beginning of the starting time period, it may be of any suitable preselected value, which should anyhow be low, said value in Fig. 2 being indicated as 12.5 which means that, in this chosen case, will the active pulse comprise 12.5 % of the pulse time period and the pulse free part, the so called inter-pulse, will comprise 87.5 % of the duration of the pulse-time period. The pulse time relation, thus, increases successively so that, at the time $t_2$, it is 87.5 which means that the duration of the active part of the pulse is 87.5 % of the period, whereas the inter-pulse period is, instead, only 12.5 % of same period.

Pulse equalization takes place in the equalization device, which is shown to comprise a resistor 20 acting as a filter. If this pulse equalization would be idealic which is scarecely possible in practice, then apure D. C. current would appear in the output of the filter. This current is fed to the D. C. amplifyer 24 and is, in amplified form, transmitted to one of the two input circuits of the comparator 26. This current, or the voltage representing said current, thus, increases with time and if this variation with time takes place linearly, and also the pulse shape is rectangular, then the variation of the D. C. voltage or current fed to the comparator 26 will also vary linearly with time. It may then be assumed that the curve in the enlarged picture part of Fig. 2 will give an expression for the increase of the voltage or current concerned.

The invention, of course, may also be used with another shape of the pulses than the rectangular one, e. g. a parallel trapezoidical shape or a saw tooth shape but essential advantages are gained in the form of a constant sensitivity of the subsequent parts of the arrangement if the pulse shape is rectangular because the variation will then take place linearly over all of the variation range.

The output from the amplifyer is compared in the comparator 26 with the voltage fed from the sensor means 28 for the outdoor temperature. Consequently, if the outdoor temperature is very low, which means a cold weather, balance will exist in the comparator already at an early time of the feed of the equalized pulses from the amplifyer 24, e. g. at the time $t_3$, Fig. 2, but if the outdoor temperature is high, which means warm weather, balance will only exist at a later time, e. g. at the time $t_4$, Fig. 2. When a state of balance has been achieved, the climatization system is started, which is shown in the chosen embodyment to mean that the heater vessel 32 is started to give off heat to the locality to be subject to climatization.

It will now be evident that one has, in this way, taken due consideration to the greater and earlier need for heat for the climatization at cold outdoor weather, represented by the state of balance at the time $t_3$ and that the period of time available for heating will, thus, start earlier and have a longer duration. Matters will, of course be reversed at warm outdoor weather.

When the starter relay 30′ for the climatizaton atracts, also the climatization means will start and this means, thereby, is automatically controlled by the control device 34. If the climatization means is a heater vessel 32, thus, the control device 34 may be a thermostate in combination with adjustment means for the shunt valve of the vessel so that at a smaller need for heat will water of a lower temperature be fed to the existing heat radiators and *vice versa*.

The arrangement now described is very simple and reliable in operation. In its most simple form it only comprises a manual adjustment possibility over the conduit 14 based upon experience of the person taking care of the system. This is completely sufficient in buildings which are rather small such as smaller villa buildings. The influence of the outdoor temperature then is effected in full by the sensor means 28 which determines the starting time for the heater vessel 32 such that this is started earlier at cold outdoor weather and later at warm outdoor weather. Simultaneously, the arrangement is shaped such that it may at a low cost be completed for providing further functions fed over the means 16. They are then brought automatically to influence the control voltage in the conduit 14.

The timer 12 preferably also determines the time for shut-off of the climatization system which could, according to the above, for instance take place such that the locality is cold or, anyhow, has a temperature of less than the comfortable one at 20 : 00 o'clock in the evening. Regarding the existing heat capacity, however, the shut-off perod may start already at an earlier time and, according to Fig. 2, this period of time may start at 18 : 00 o'clock using the arrangement already described, so that the shut-off is completed for instance at 20 : 00 o'clock. The two times 18 : 00 and 20 : 00, in Fig. 2, have been indicated by $t_5$ and $t_6$, respectively.

Of course, it is not necessary to have the shut-off of the climatization system take place dependent upon the outdoor temperature, even if this means a very simple step which is often advantageous. As it is assumed that the locality is not used during the period of time from $t_5$ or $t_6$ to $t_1$ or $t_2$, respectively, the shut-off of the climatization system could be effected directly from the timer 12 to the starter device 30 and, in this way, indirectly to the climatization means (heater vessel 32). At very cold outdoor temperature, however, it may occur that, during a rather long stop of operation, damages due to freezing could occur in the localyty or in existing piping, especially during the week ends during winter time. To avoid this, one may instead have the timer 12 to influence the control device 34 such that the climatization means will still be in operation during the period of standstill, however, thereby maintaining an essentially lower temperature which is, nevertheless, safe against damages due to freezing.

To satisfy the said purpose, one may provide an output conduit 36 from the timer 12 to a switch 38 by means of which one may direct the signal from the timer 12 either, over a conduit 40, to a control devide 34 in order to adjust this for a lower « night temperature » in the locality, or, over a conduit 42 to the starter device 30 for the climatization in order to completely shut it off.

In Fig. 3, the pulse generator part of the system is shown in block diagram. The different coupling components represented by the blocks of this diagram are conventional and well known to the man skilled in the art and, therefore, no closer description of them would be necessary.

The starting conduit from the timer 12 is shown at 31 and will also be found in Fig. 1. It causes the starting of a conventional pulse generator 33 for creating saw tooth shaped pulses 35 which are carried on to a pulse limiter 37. The pulse limiter 37 is controlled by the bias creator 39 which is also started over the conduit 31 and may either be of such a type that it will create a successively increasing or a successively decreasing bias voltage during the starting period of time $t_1$-$t_2$. In Fig. 3, the bias voltage is shown as successively increasing. The curve 41 showing this bias voltage, of course, is reproduced in an essentially suppressed scale in relation to the scale of the pulses. The bias voltage is fed to the pulse limiter 37 in such a way that the lower parts 43 of the saw tooth shaped pulses 35 will be cut off at a continuously increasing rate with the consequence that only the peaks 45 of the pulses will remain. Then, it is obvious that these peaks will possess a constant frequency and duration of each pulse.

The pulses 45 are fed to a pulse shaper 47 of conventional type in which they are, without any change of the pulse frequency, or the pulse duration, re-shaped into rectangular pulses 49 which are, over an amplifier 51, fed to a limiter 53 to that one will get, in the output circuit 55 of the limiter 53 which is also shown in Fig. 1, a pulse train of the general type shown at 57. Thus, it should be observed that the pulse train has a constant frequency and, after amplification and limitation of the amplitude, a constant amplitude, but it has a variable duration of each puls. With other words, the pulse-time relation is changed in time with the curve 41. The specific shape of the pulse train 57 may be regarded representative for the pulse shape at the end 59 of the curve 41.

Fig. 4 shows a preferred embodyment of the comparator 26. Thus, this one has two input conduits 44 and 46 which are also found in Fig. 1. Each of the input signals over the conduits 44 and 46 is amplified in this embodyment of the comparator by means of two transistors in cascade, viz. for the conduit 44 the transistors 48 and 50 and for the conduit 46 the transistors 52 and 54. They get their operation voltage from a mains conductor 68 past a rectifier 56. For stabilization, the two groups of transistors 48-50 and 52-54, respectively, are grounded each over one transistor 58 and 60, respectively, and the starting voltage or difference voltage, thus representing the voltage existing in the output of the comparator 26 at the time $t_4$, Fig. 2, will then also exist in a conduit 62. This voltage may be assumed not to be sufficiently strong for control purposes concerned, and therefore, it is further amplified in a transistor amplifier 64 with decoupling condenser 66 and with feed of operation voltage from a mains conductor 68 past a rectifier 70. The amplified output voltage, consequently, will exist in a conduit 72, also found in Fig. 1.

Now, it is evident that the comparator must not necessarily be of the transistor controlled type such as shown in Fig. 4 but it may also be of any other suitable type. Such a comparator, which is extremely simple may comprise a Wheatstone bridge known *per se* in which a first resistor is fed with a voltage from the conduit 44 and a second resistor is fed with a voltage from the conduit 46. Suitably, the bridge should be fed with D. C. current at two of its diagonal points, and the output voltage to the conduit 72 should be collected from the two remaining diagonal points. Also this voltage, however will be too week, in ordinary cases, to control the starter device 30 and, therefore, it should be amplified which takes place, in the present case, by the voltage being impressed upon the winding of an amplifier relay, the exited closed contact of which, in turn, feeds voltage to the starter-device 30.

Fig. 5 shows an example of a relay control which could, of course, also be made as a transistor controlled device or a device for same purpose of any deliberate other type. Fig. 5, thus, only intends to explain the function of the starter device 30.

The input conduit 72, here, runs to a first relay, the connection relay 74, which is coupled as a self latching relay. Thus, it possesses a contact 76 which is closed when the voltage is fed to the winding of the relay 74 and closes thereby a self latching circuit from the plus terminal over a release relay 80 for the input end of the winding of realy 74 so that this relay will remain attracted as long as the release relay 80 does not get voltage. The connection relay 74 delivers voltage, over its attracted contact 82, to a conduit 84 running to the climatizations means (heating vessel 32) and causing start of same.

When the timer indicates that the starter device 30 shall no longer be in operation, voltage is fed, over the conduit 42 which causes attraction of the release realy 80 which, thereby, opens, at the contact 78, the self latching circuit for the connection relay 74 so that this realy will, in turn, fall and, at the contact 76, open the operation indication circuit to the starter device 40 and the heater vessel 32.

A similar arrangement may be connected to the control device 34 for causing, instead, a control for moderate indoor temperature during the period of standstill. The man skilled in the art will immediately understand how this arrangement should be constructed.

**Claims**

1. An arrangement for starting and stopping, respectively, a climatization system, e. g. a heating system for a locality, dependent upon, at least, the indoor temperature proper of the locality and the outdoor temperature, comprising a pulse generator (10) for creating pulses forming a pulse train (35), said train of pulses being fed to a comparator (26), which is also fed with a voltage from a means (28) indicating the outdoor temperature so that when a state of balance is obtained between the two voltages, a signal is transmitted for starting the climatization system, charaterized in that the pulse generator (10) is arranged to create pulses of successively changed pulse-time relation, said train of pulses being fed to an equalization device (18) and from this in the form of a successively changed voltage, preferably a D. C. voltage which is at least approximately free from A. C. components, to the comparator (26), so that when the state of balance is obtained between the two voltages, a signal will be transmitted for starting the climatization system, and that a conduit (36) is provided to transmit an indication, e. g. from a timer (12) to the climatization system to stop its operation at a preselected time.

2. An arrangement according to claim 1, characterized in that the pulse generator (10) is arranged to be started from a preferably adjustable timer (12), which may be the same one used for stopping the climatization.

3. An arrangement according to claim 2, characterized in that the timer (12) is arranged to give a signal to a relay control device (34) for stopping the operation of the climatization system.

4. An arrangement according to any of the above claims, characterized in that the equalization device (18) comprises a filter, such as an L-filter with resistor (20) and condenser (22).

5. An arrangement according to any of the above claims, characterized in that the pulse generator (10) is arranged to create rectangular pulses (49, 57).

6. An arrangement according to any of the above claims, characterized in that the pulse generator (10) is arranged to create pulses, the pulse-time relation of which varies according to a linear function of time.

7. An arrangement according to any of the claims 3-6, characterized in that a release conduit (40) is arranged to re-arrange the control device (34) for the climatization system to decrease power during given periods of time and to increase power during other periods of time.

8. An arrangement according to any of the claims 3-6, characterized in that a release conduit (42) is arranged completely to shut off the operation of the climatization means during given periods of time.

9. An arrangement according to claim 7 or 8, characterized in that a swith (38) is provided to put either one of the two release conduits (40, 42) into or out of operation.

**Ansprüche**

1. Vorrichtung um in Abhängigkeit wenigstens von der vorhandenen Innentemperatur in einem Raume und von der Aussentemperatur eine Klimatizierungsanlage in bzw. ausser Betrieb zu versetzen, z. B. eine Heizungsanlage für den Raum, die einen Impulserzeuger (10) für die Erzeugung einer Impulsreihe (35) enthält, die einem Vergleicher (26) zugeführt wird, der ebenfalls mit einer Spannung von einem die Aussentemperatur angebenden Mittel (28) gespeist wird, so dass, wenn Gleichgewichtszustand zwischen den beiden Spannungen entsteht, ein Signal zwecks Inbetriebsetzen der Klimatizierungsanlage abgegeben wird, dadurch gekennzeichnet, dass der Impulserzeuger (10) angeordnet ist, Impulse mit einem sich allmählich verändernden Impuls-Zeit-Verhältnis zu schaffen, welche Impulsreihe einer Ausgleichsvorrichtung (18) und von dieser in der Form von einer Spannung mit sich allmählich verändernder Stärke, vorzugsweise einer Gleichstromspannung, die wenigstens einigermassen frei von Wechselstrombestandteilern ist, dem Vergleicher (26) in solcher Weise zugeführt wird, dass, wenn der Gleichgewichtszustand zwischen den beiden Spannungen erreicht wird, ein Signal zwecks Inbetriebsetzen der Klimatizierungsanlage übertragen wird, und dass eine Leitung (36) zwecks Übertragung einer Angabe, z. B. von einem Zeitgeber (12), zu der Klimatizierungsanlage um sie zu einer gegebenen Zeit ausser Betrieb zu setzen angeordnet ist.

2. Vorrichtung nach Anspruch 1, dadurch gekennzeichnet, dass der Impulserzeuger (10) angeordnet ist, durch einen vorzugsweise einstellbaren Zeitgeber (12) in Betrieb versetzt zu werden, der derselbe sein kann, der zum Ausserbetriebsetzen der Klimatizierung benutzt wird.

3. Vorrichtung nach Anspruch 2, dadurch gekennzeichnet, dass der Zeitgeber (12) angeordnet ist, ein Signal zwecks Ausserbetriebsetzen der Wirkung der Klimatizierungsanlage an eine Relaisregelungsvorrichtung (34) abzugeben.

4. Vorrichtung nach einem der obigen Ansprüche, dadurch gekennzeichnet, dass die Ausgleichsvorrichtung (18) ein Filter enthält, z. B. ein L-Filter mit Widerstand (20) und Kondensator (22).

5. Vorrichtung nach einem der obigen Ansprüche, dadurch gekennzeichnet, dass der Impulserzeuger (10) angeordnet ist, Viereckimpulse (49, 52) zu erzeugen.

6. Vorrichtung nach einem der obigen Ansprüche, dadurch gekennzeichnet, dass der Impulserzeuger (10) angeordnet ist, Impulse zu erzeugen, deren Impuls-Zeit-Verhältnis sich nach einer linearen Funktion mit der Zeit verändert.

7. Vorrichtung nach einem der Ansprüche 3-6, dadurch gekennzeichnet, dass ein Entlastungskreis (40) angeordnet ist um die Regelungsvorrichtung (34) der Klimatizierungsanlage dazu umzustellen, während bestimmter Zeitperioden die Leistung zu vermindern und während anderer Zeitperioden si zu vergrössern.

8. Vorrichtung nach einem der Ansprüche 3-6, dadurch gekennzeichnet, dass eine Entlastungsleitung (42) angeordnet ist, die Wirkung der Klimatizieringsmittel während bestimmter Zeitperioden ganz auszuschalten.

9. Vorrichtung nach Anspruch 7 oder 8, dadurch gekennzeichnet, dass ein Schalter (38) angeordnet ist, die eine oder die andere der beiden Entlastungsleitungen (40, 42) in oder ausser Betrieb zu versetzen.

## Revendications

1. Système pour faire démarrer et arrêter, respectivement, une installation de climatisation, par exemple une installation de chauffage pour une habitation, en fonction au moins de la température intérieure de l'habitation et de la température extérieure, comprenant un générateur d'impulsions (10) destiné à créer des impulsions formant un train d'impulsions (35), le train d'impulsions (35) étant appliqué à un comparateur (26) qui est aussi alimenté au moyen d'une tension par un dispositif (28) indiquant la température extérieure, de sorte que lorsqu'un état d'équilibre est obtenu entre les deux tensions, un signal est transmis pour faire démarrer le système de climatisation, caractérisé en ce que le générateur d'impulsions (10) est agencé de manière à créer des impulsions dont la relation par rapport au temps varie successivement, le train d'impulsions étant fourni à un dispositif d'égalisation (18) et à partir de ce dispositif, sous la forme d'une tension modifiée successivement, de préférence une tension continue, qui est au moins approximativement exempte de composantes de courant alternatif, au comparateur (26), de sorte que lorsque l'état d'équilibre est obtenu entre les deux tensions, un signal est transmis pour faire démarrer l'installation de climatisation et une ligne (36) est prévue pour transmettre une indication, par exemple à partir d'un dispositif à temps (12), à l'installation de climatisation pour arrêter son fonctionnement à un moment présélectionné.

2. Système suivant la revendication 1, caractérisé en ce que le générateur d'impulsions (10) peut démarrer à l'intervention d'un dispositif à temps de préférence réglable (12) qui peut être le même que celui utilisé pour arrêter la climatisation.

3. Système suivant la revendication 2, caractérisé en ce que le dispositif à temps (12) fournit un signal à un dispositif de commande à relais (34) pour arrêter le fonctionnement de l'installation de climatisation.

4. Système suivant l'une quelconque des revendications précédentes, caractérisé en ce que le dispositif d'égalisation (18) comprend un filtre, tel qu'un filtre en L avec une résistance (20) et un condensateur (22).

5. Système suivant l'une quelconque des revendications précédentes, caractérisé en ce que le générateur d'impulsions (10) crée des impulsions rectangulaires (49, 57).

6. Système suivant l'une quelconque des revendications précédentes, caractérisé en ce que le générateur d'impulsions (10) crée des impulsions dont la relation par rapport au temps varie selon une fonction de temps linéaire.

7. Système suivant l'une quelconque des revendications 3 à 6, caractérisé en ce qu'une ligne de déclenchement (40) est prévue pour agir sur le dispositif de commande (34) de telle sorte que l'installation de climatisation réduise sa puissance pendant des périodes données et augmente sa puissance pendant d'autres périodes.

8. Système suivant l'une quelconque des revendications 3 à 6, caractérisé en ce qu'une ligne de déclenchement (42) est prévue pour couper complètement le fonctionnement du dispositif de climatisation pendant des périodes données.

9. Système suivant la revendication 7 ou 8, caractérisé en ce qu'un interrupteur (38) est prévu pour mettre l'une ou l'autre des deux lignes de déclenchement (40, 42) en ou hors service.

FIG. 1

FIG. 2

1

FIG. 3

FIG. 4

FIG. 5